# EUROPÄISCHE PATENTSCHRIFT

(11) **EP 1 643 284 B1**
(45) Veröffentlichungstag und Bekanntmachung des Hinweises auf die Patenterteilung: **18.10.2006**
(21) Anmeldenummer: 04023319.9
(22) Anmeldetag: 30.09.2004
(51) Int. Cl.: G02B 13/00, B23K 26/02

(54) **Vorrichtung zur Fokussierung eines Laserstrahls**
Laser beam focusing device
Dispositif de focalisation d'un faisceau laser

(43) Veröffentlichungstag der Anmeldung: 05.04.2006
(73) Patentinhaber: TRUMPF Laser GmbH + Co. KG, 78713 Schramberg (DE)
(72) Erfinder: Brüstle, Reiner, 78730 Lauterbach (DE); Huonker, Martin, 78658 Zimmern (DE); Voss, Andreas, 78713 Schramberg (DE)
(74) Vertreter: Kohler Schmid Möbus

(56) Entgegenhaltungen:
- EP-A- 0 723 834
- EP-A- 0 877 273
- FR-A1- 2 603 709
- US-A- 6 059 721
- PATENT ABSTRACTS OF JAPAN Bd. 2000, Nr. 10, 17. November 2000 (2000-11-17) -& JP 2000 197984 A (MATSUSHITA ELECTRIC IND CO LTD), 18. Juli 2000 (2000-07-18)

## Beschreibung

Die vorliegende Erfindung betrifft eine Vorrichtung zur Fokussierung eines Laserstrahls mit einer Teleskopanordnung, die ein kollimierendes optisches Element zur Kollimierung des Laserstrahls und ein nachgeordnetes fokussierendes optisches Element zur Fokussierung des Laserstrahls auf einen Fokuspunkt umfasst.

Ein gängiger Scanner-Bearbeitungskopf zum schnellen räumlichen Bearbeiten von Werkstücken mit Hilfe von Laserstrahlen besteht aus einer Scanneroptik mit üblicherweise zwei Spiegeln, die einen kollimierten oder nahezu kollimierten Strahl in einer ersten und zweiten Raumrichtung ablenken und über ein Planfeldobjektiv auf das Werkstück leiten. Ein alternatives System sieht vor, einen fokussierten Strahl hinter der Fokussierlinse über mindestens einen Scanner-Spiegel auf das Werkstück zu leiten. Sollen mit Hilfe einer solchen Scanneroptik dreidimensionale Objekte bearbeitet werden, so muss zusätzlich die Lage des Fokuspunkts der Laserstrahlung in Strahlrichtung einstellbar sein. Hierzu wird eine Vorrichtung zur Fokussierung des Laserstrahls benötigt, welche eine Verschiebung der Fokuslage in Strahlrichtung erlaubt.

Ist der an die Scanneroptik angeschlossene Laser ein Festkörperlaser, so wird der Ausgangsstrahl des Lasers vorzugsweise über eine Glasfaser (Laserlichtkabel) an die Scanneroptik übertragen. In der Scanneroptik tritt der Laserstrahl divergent aus dem Laserlichtkabel aus, wird mit Hilfe einer Kollimationslinse kollimiert, anschließend durch die Scannerspiegel abgelenkt und mit einem Planfeldobjektiv auf das Werkstück fokussiert. Zur Verstellung des Fokus entlang der Strahlachse ist es notwendig, die Divergenz des auf das Fokussierobjektiv fallenden Strahls zu verändern. Dies kann beispielsweise dadurch erfolgen, dass die zur Kollimation des aus dem Laserlichtkabel austretenden divergenten Strahls verwendete Kollimationslinse entlang der Strahlachse bewegt wird.

Der Nachteil dieses Lösungsansatzes besteht darin, dass die Kollimationslinse verhältnismäßig groß und damit schwer ist und dass ein relativ großer Hub der Linse benötigt wird, um einen nennenswerten Fokushub des Arbeitsstrahles zu erreichen. Die üblicherweise geforderte hohe Dynamik der Hubbewegung führt bei diesem Ansatz zu sehr hohen Antriebsleistungen, die eine große und schwere Bauform (mit nochmals erhöhter bewegter Masse) sowie eine aufwändige Ansteuerung und Kühlung der Aktuatoren bedingt. Weiterhin übt die große, stark beschleunigte Masse erhebliche Reaktionskräfte auf den statischen Teil des Aufbaus aus, die unter Umständen zu unerwünschten Bewegungen bzw. Schwingungen des (beispielsweise an einem Roboterarm befestigten) Strahlführungssystems führen und nur mit erheblichem Mehraufwand kompensiert bzw. minimiert werden können.

Aus den Druckschriften JP05002146, JP2000197984, JP07116869 und JP2003012346 ist es außerdem bereits bekannt, ein Teleskopsystem aus zwei - ggf. unterschiedlich großen - Linsen zu benutzen, um die Divergenz des Strahls zu beeinflussen. Es wird eine der beiden Linsen verschoben, vorzugsweise die kleinere, die mit geringerem Krafteinsatz verschiebbar ist, um den Abstand zwischen den beiden Linsen zu verändern. Die Linsen befinden sich hierbei im kollimierten, nicht im divergenten Strahl.

Demgegenüber ist es die Aufgabe der vorliegenden Erfindung, eine Vorrichtung der eingangs genannten Art dahingehend weiterzubilden, dass eine Positionierung des Fokuspunkts in Strahlrichtung mit einer hohen Geschwindigkeit erreicht werden kann, wobei insbesondere unerwünschte Schwingungen der Vorrichtung vermieden werden.

Diese Aufgabe wird erfindungsgemäß dadurch gelöst, dass im divergenten Strahlengang vor der einen, ersten Teleskopanordnung eine weitere, zweite Teleskopanordnung mit einer ersten Linse und einer nachgeordneten zweiten Linse angeordnet ist, wobei die erste Linse und/oder die zweite Linse der zweiten Teleskopanordnung relativ zueinander in Strahlrichtung verschiebbar sind. Für die zweite Teleskopanordnung können aufgrund ihrer Positionierung im divergenten Strahlengang vor der ersten Teleskopanordnung Linsen mit geringerer Brennweite verwendet werden als bei der ersten Teleskopanordnung. Der zur Verstellung des Fokus entlang der Strahlachse erforderliche Linsenhub reduziert sich daher im Verhältnis der Brennweiten. Der Abstand zwischen der ersten Linse und der zweiten Linse der zweiten Teleskopanordnung ist im Wesentlichen gleich der Summe der Beträge ihrer Brennweiten. Der Linsenabstand wird so gewählt, dass der Abbildungsmaßstab der Faseraustrittsfläche auf das Werkstück bei Verschiebung der Linsen weitgehend konstant bleibt. Der optimale Linsenabstand für das Erreichen dieser Vorgabe ist ungefähr die Summe der Linsenbrennweiten.

In einer bevorzugten Ausführungsform sind die Linsendurchmesser der zweiten Teleskopanordnung geringer als die Durchmesser der optischen Elemente der ersten Teleskopanordnung, bei denen es sich sowohl um Linsen als auch um Spiegel handeln kann. Durch die Positionierung der Linsen der zweiten Teleskopanordnung im divergenten Laserstrahl wird erreicht, dass diese Linsen nur einen geringen Durchmesser und damit eine geringe Masse haben müssen und somit hochdynamisch bewegt werden können. Die Teleskoplinsen sollten grundsätzlich so klein wie möglich sein, um ihre dynamischen Eigenschaften zu optimieren.

In einer weiteren bevorzugten Ausführungsform weisen die erste Linse und die zweite Linse der zweiten Teleskopanordnung jeweils betragsmäßig annähernd gleich große Brennweiten auf. In diesem Fall hat eine (durch äußere Kräfte bedingte) gleichsinnige Bewegung beider Linsen nur sehr geringen Einfluss auf die Fokuslage.

In einer bevorzugten Ausführungsform ist die zweite Teleskopanordnung in der Nähe der Austrittsebene eines Laserlichtkabels angeordnet. Hierbei können in der zweiten Teleskopanordnung Linsen mit besonders geringen Durchmessern verwendet werden.

In einer weiteren bevorzugten Ausführungsform sind die erste Linse und die zweite Linse der zweiten Teleskopanordnung als Sammellinsen ausgebildet. Die Teleskopanordnung ist in diesem Fall als Keplersches Teleskop ausgelegt. Mit einer solchen Anordnung kann eine Kollision des Strahlverlaufs mit einem kompakten koaxialen Antrieb für die Verschiebung der Linsen vermieden werden. Beim Keplerschen Teleskop ergibt sich nach der zweiten Linse ein Zwischenfokus, so dass hinter der zweiten Linse der Strahldurchmesser über eine axiale Entfernung von ca. zwei Brennweiten den Linsendurchmesser nicht überschreitet. In diesem Bereich kann der zweite Antrieb mit einem entsprechend kleinen Bohrungsdurchmesser angeordnet werden. Weiterhin beträgt der optimale Linsenabstand etwa die Summe der Brennweiten. Durch die beim Kepler-Teleskop relativ große Summe der Brennweiten wird zusätzlich Bauraum für die Antriebe gewonnen.

Bei einer alternativen Ausführungsform sind bei der zweiten Teleskopanordnung die erste Linse als Sammellinse und die zweite Linse als Zerstreuungslinse ausgestaltet. Die Teleskopanordnung ist in diesem Fall als Galileisches Teleskop gestaltet. Hier kann der Abstand zwischen der ersten Linse und der zweiten Linse sehr klein gewählt werden.

Bei einer weiteren, besonders bevorzugten Ausführungsform sind die erste Linse und die zweite Linse der zweiten Teleskopanordnung in Strahlrichtung gegenläufig mit annähernd gleichen Weglängen bewegbar. Hierdurch kann besonders vorteilhaft eine Divergenzänderung des Strahls erreicht werden. Der zur Verstellung des Fokus entlang der Strahlachse benötigte Linsenhub wird auf zwei Linsen aufgeteilt. Hierdurch wird für jede der beiden Linsen eine Halbierung des erforderlichen Linsenhubes erreicht, was die Dynamik der Linsenbewegung deutlich erhöht. Da die Bewegung der Linsen symmetrisch gegenläufig erfolgt, ist außerdem sichergestellt, dass nur geringe Reaktionskräfte an der Halterung der Fokussiervorrichtung auftreten.

In einer bevorzugten Ausführungsform ist bei der zweiten Teleskopanordnung die erste Linse und/oder die zweite Linse in einer Lagereinrichtung gelagert, die mindestens eine ringförmige Membranfeder umfasst, deren Innendurchmesser im Wesentlichen dem Linsendurchmesser entspricht, wobei die Membranfeder insbesondere eine Mehrzahl von azimutalen Schlitzen aufweist.

In einer bevorzugten Weiterbildung dieser Ausführungsform umfasst die Lagereinrichtung zwei in Strahlrichtung voneinander beabstandete Membranfedern, die durch ein parallel zur Strahlrichtung verlaufendes Rohr im Bereich des Innendurchmessers miteinander verbunden sind. Hierbei sorgt die hohe radiale Steifigkeit der Einzelmembran für eine hohe Verkippungssteifigkeit des Verbundes (Prinzip der Parallelogrammlagerung).

Die Erfindung betrifft auch einen Scanner-Bearbeitungskopf zur dreidimensionalen Werkstückbearbeitung mit einer oben beschriebenen Vorrichtung zur Fokussierung des Laserstrahls, wobei die Lage des Fokuspunktes in einer ersten und zweiten Raumrichtung mit einer Scanneroptik, z.B. mit einem einzigen oder mit zwei Spiegeln, und in einer dritten Raumrichtung durch Verändern der Fokuslage mit der Vorrichtung einstellbar ist. Bei einem solchen Scanner kann die Laserbearbeitung des Werkstücks in allen drei Raumrichtungen mit annähernd gleicher Geschwindigkeit erreicht werden.

Der Einsatz der erfindungsgemäßen Vorrichtung zur Fokussierung eines Laserstrahls ist jedoch nicht auf die Anwendung in einem Scanner-Bearbeitungskopf beschränkt. Ebenso kann es beispielsweise für Tiefschweißprozesse wünschenswert sein, in einen Bearbeitungskopf ohne Scanneroptik eine erfindungsgemäße Teleskopanordnung zur schnellen Fokuslageverstellung in der Strahlachse zu integrieren.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Ausführungsform der erfindungsgemäßen Vorrichtung mit einer ersten und einer zweiten Teleskopanordnung zur Fokussierung eines Laserstrahls in drei Teilbildern a, b, c entsprechend drei unterschiedlichen Lagen eines Fokuspunkts;
- Fig. 2: die in Fig. 1 gezeigte zweite Teleskopanordnung mit zwei Lagereinrichtungen, die jeweils zwei ringförmige Membranfedern umfassen, in einem stark schematisierten Längsschnitt;
- Fig. 3: eine Vorderansicht einer der ringförmigen Membranfedern von Fig. 2 mit azimutalen Schlitzen; und
- Fig. 4: einen Scanner-Bearbeitungskopf zur dreidimensionalen Materialbearbeitung mit einer erfindungsgemäßen Vorrichtung zur Fokussierung gemäß Fig. 2.

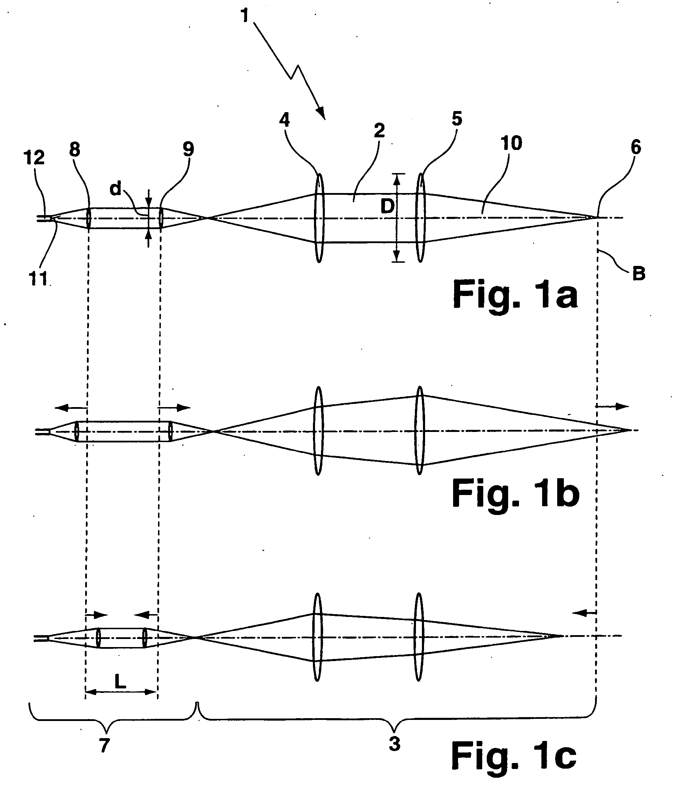

Die in der **Fig. 1** gezeigte Vorrichtung **1** zur Fokussierung eines Laserstrahls **2** dient zum Verändern der Fokuslage. Die Vorrichtung 1 umfasst eine erste Teleskopanordnung **3** mit einer Kollimationslinse **4** und einer Fokussierlinse **5** (Durchmesser **D)** zur Fokussierung des Laserstrahls 2 auf einen Fokuspunkt **6.** Im Strahlengang vor der ersten Teleskopanordnung 3 ist eine zweite Teleskopanordnung **7** mit einer ersten Linse **8** und einer nachgeordneten zweiten Linse **9** (Durchmesser **d**<D) angeordnet, wobei die erste Linse 8 und die zweite Linse 9 der zweiten Teleskopanordnung 7 relativ zueinander in Strahlrichtung **10** verschiebbar sind. Die zweite Teleskopanordnung 7 ist in der Nähe einer Austrittsfläche **11** eines Laserlichtkabels **12** angeordnet. Die zweite Teleskopanordnung 7 ist als Kepler-Teleskop ausgestaltet, da die erste Linse 8 und die zweite Linse 9 der zweiten Teleskopanordnung 7 Sammellinsen sind. Beide Linsen 8,9 weisen identische Bauart und somit identische Brennweiten auf. Insgesamt ergibt sich für den Laser-Hochleistungsbereich für die Linsen 8,9 ein optimaler Brennweitenbereich von ca. 20-60 mm für das Kepler-Teleskop. Bei Verwendung eines Galilei-Teleskops als zweiter Teleskopanordnung liegt der Brennweitenbereich tendenziell etwas höher.

Die Wirkungsweise der Vorrichtung 1 ist beispielhaft in den Teilbildern a bis c der Fig. 1 dargestellt. Fig. 1 a zeigt die Vorrichtung 1 im Ruhezustand. Die erste Linse 8 und die zweite Linse 9 der zweiten Teleskopanordnung 7 sind hier in einem Abstand **L** voneinander angeordnet, der im Wesentlichen gleich der Summe der Beträge ihrer Brennweiten ist. Der Fokuspunkt 6 des Laserstrahls 2 liegt hierbei in einer Ebene **B.**

Fig. 1 b zeigt, wie sich durch ein gegenläufiges Auseinanderziehen der ersten Linse 8 und der zweiten Linse 9 mit annähernd gleichen Weglängen der Fokuspunkt 6 von der Ebene B im Strahlengang hinter die Ebene B verschiebt. Fig. 1 c zeigt, wie sich der Fokuspunkt 6 beim Zusammenschieben der ersten Linse 8 und der zweiten Linse 9 mit annähernd gleichen Verschiebungs-Weglängen von der Ebene B im Strahlengang vor die Ebene B verschiebt.

Der Abstand L in der Ruhelage ist so gewählt, dass der Abbildungsmaßstab der Faseraustrittsfläche auf das Werkstück weitgehend konstant bleibt. Die erzielbare minimale Maßstabsvariation hängt von der gewählten optischen Anordnung (z.B. Art und Größe der Teleskopanordnung, Länge des kollimierten Strahls etc.) sowie von der geforderten Fokuslageverschiebung im Verhältnis zur Brennweite des fokussierenden optischen Elements der ersten Teleskopanordnung ab. Je nach Bearbeitungs-Anwendung sind maximal einige Prozent Variation der Abbildung ohne Kompensation (z.B. Anpassung der Bearbeitungsgeschwindigkeit oder der Laserleistung) zulässig.

Die Durchmesser d der ersten Linse 8 und der zweiten Linse 9 der zweiten Teleskopanordnung 7 sollten grundsätzlich so klein wie möglich sein, um die dynamischen Eigenschaften der Vorrichtung 1 zu optimieren. Bei kleinen Linsenaperturen, die sich aus kurzen Brennweiten ergeben, ist die Gefahr der Überhitzung von Fassungen und Strahlführungselementen (Abdeckungen, Blenden etc.) erhöht. In diesem Fall kann eine aktive Kühlung erforderlich werden. Je nach Gestalt des Lichtleitersteckers bzw. der Steckeraufnahme ergibt sich ein Mindest-Arbeitsabstand (und damit eine Mindest-Brennweite) für die erste Linse 8 von der Austrittsfläche 11 des Laserlichtkabels 12.

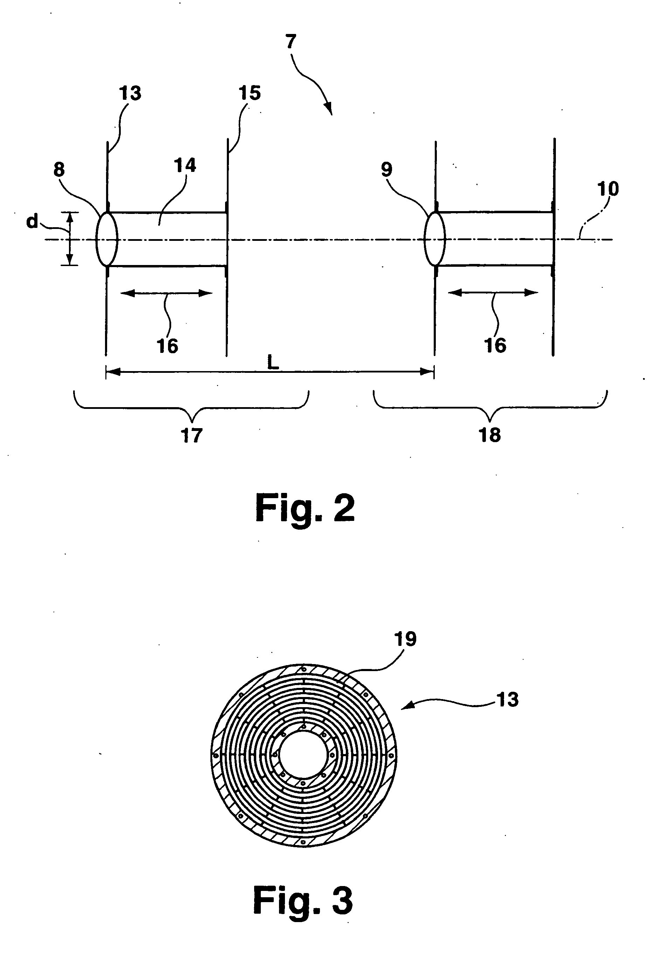

**Fig. 2** zeigt die Lagerung der zweiten Teleskopanordnung 7. Die erste Linse 8 ist in einer ringförmigen Membranfeder **13** gelagert, deren Innendurchmesser an den Durchmesser d der Linse 8 angepasst ist. Die Membranfeder 13 steht über ein Rohr **14** in Verbindung mit einer weiteren Membranfeder **15.** Das Rohr 14 ist mit einem Linearantrieb (nicht gezeigt) zur Verschiebung (Doppelpfeil **16)** der ersten Linse 8 in Strahlrichtung 10 verbunden, der als Tauchspulenantrieb ausgebildet und in Strahlausbreitungsrichtung hinter der zweiten Membranfeder 15 koaxial zum Laserstrahl angeordnet ist. Die gesamte Anordnung zur Lagerung der ersten Linse 8 bildet eine erste Lagereinheit **17.** Aufgrund der identischen Bauart der zweiten Linse 9 kann zu deren Lagerung eine zweite Lagereinheit **18** mit zur ersten identischem Aufbau verwendet werden. Die Gesamt-Baulänge der Linearantriebe sollte beim Kepler-Teleskop maximal etwa das vierfache der Brennweite betragen.

**Fig. 3** zeigt die Membranfeder 13 der zweiten Teleskopanordnung 7 in einer Draufsicht. Die Membranfeder 13 besteht vorzugsweise aus Edelstahl, gehärtetem Federstahl oder Federbronze und weist eine sehr geringe Steifigkeit in axialer Richtung auf, was sich vorteilhaft auf die Dynamik der Bewegung und auf die benötigte Antriebsleistung auswirkt. Die Steifigkeit der Membranfeder 13 in radialer und azimutaler Richtung ist sehr hoch, so dass nur eine axiale Bewegung einer Linse, nicht aber eine Verdrehung oder seitliche Verschiebung eintreten kann. Die Membranfeder 13 weist eine Anzahl von azimutalen Schlitzen **19** auf (die z.B. mittels Laserschneiden hergestellt werden können), welche die axiale Steifigkeit der Membranfeder 13 stark reduzieren, aber noch eine hohe radiale Steifigkeit erhalten.

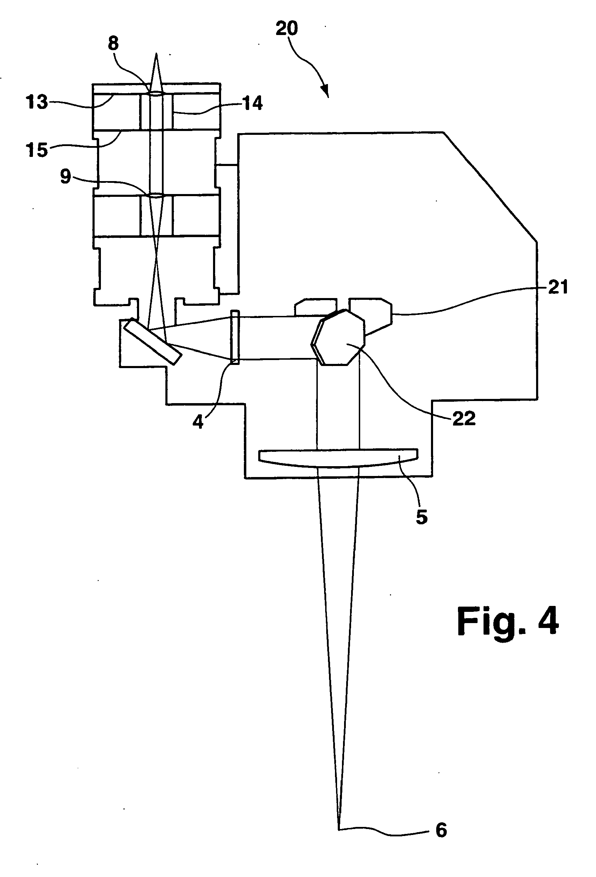

Die Vorrichtung 1 zur Fokussierung eines Laserstrahls 2 kann besonders vorteilhaft in einem Scanner-Bearbeitungskopf **20** zur dreidimensionalen Werkstückbearbeitung eingesetzt werden, wie in **Fig. 4** gezeigt ist. Hierbei ist die Lage des Fokuspunktes 6 in einer ersten und zweiten Raumrichtung mit zwei Scannerspiegeln **21, 22** und in einer dritten Raumrichtung durch Verändern der Fokuslage mit der Vorrichtung 1 einstellbar. Hierdurch kann eine dreidimensionale Bearbeitung des Werkstücks erfolgen, wobei durch den kurzen Linsenhub und die geringe Masse der Linsen 8, 9 der Vorrichtung 1 sichergestellt ist, dass die Bearbeitung auch in der dritten Raumrichtung mit hinreichend großer Geschwindigkeit erfolgen kann, weil der Fokuspunkt 6 schnell verstellt werden kann. Die Lagerung mit den Membranfedern 13, 15 sichert außerdem eine präzise Einstellung der Fokuslage in der dritten Raumrichtung. Die Fokuslagenverstellung kann dabei geregelt erfolgen, wenn die Auslenkung der Linsen gemessen wird.

## Patentansprüche

1. Vorrichtung (1) zur Fokussierung eines Laserstrahls (2) mit einer Teleskopanordnung (3), die ein kollimierendes optisches Element (4) zur Kollimierung des Laserstrahls (2) und ein nachgeordnetes fokussierendes optisches Element (5) zur Fokussierung des Laserstrahls (2) auf einen Fokuspunkt (6) umfasst, wobei im divergenten Strahlengang vor der einen, ersten Teleskopanordnung (3) eine weitere, zweite Teleskopanordnung (7) mit einer ersten Linse (8) und einer nachgeordneten zweiten Linse (9) angeordnet ist und die erste Linse (8) und/oder die zweite Linse (9) der zweiten Teleskopanordnung (7) relativ zueinander in Strahlrichtung (10) verschiebbar sind,
**dadurch gekennzeichnet,**
**dass** die erste Linse (8) und/oder die zweite Linse (9) um eine Ruhelage herum verschiebbar gelagert sind, in welcher der Abstand (L) zwischen der ersten Linse (8) und der zweiten Linse (9) der zweiten Teleskopanordnung (7) gleich der Summe der Beträge ihrer Brennweiten ist.

2. Vorrichtung nach Anspruch 1, **dadurch gekennzeichnet, dass** die Linsendurchmesser (d) der zweiten Teleskopanordnung (7) geringer sind als die Durchmesser (D) der optischen Elemente der ersten Teleskopanordnung (3).

3. Vorrichtung nach Anspruch 1 oder 2, **dadurch gekennzeichnet, dass** die erste Linse (8) und die zweite Linse (9) der zweiten Teleskopanordnung (7) jeweils betragsmäßig gleich große Brennweiten aufweisen.

4. Vorrichtung nach einem der vorhergehenden Ansprüche, **dadurch gekennzeichnet, dass** die erste Linse (8) und die zweite Linse (9) der zweiten Teleskopanordnung (7) als Sammellinsen ausgebildet sind.

5. Vorrichtung nach einem der Ansprüche 1 bis 3, **dadurch gekennzeichnet, dass** bei der zweiten Teleskopanordnung die erste Linse (8) als Sammellinse und die zweite Linse (9) als Zerstreuungslinse ausgestaltet sind.

6. Vorrichtung nach einem der vorhergehenden Ansprüche, **dadurch gekennzeichnet, dass** die erste Linse (8) und die zweite Linse (9) der zweiten Teleskopanordnung (7) in Strahlrichtung (10) gegenläufig mit gleichen Weglängen bewegbar sind.

7. Vorrichtung nach einem der vorhergehenden Ansprüche, **dadurch gekennzeichnet, dass** bei der zweiten Teleskopanordnung (7) die erste Linse (8) und/oder die zweite Linse (9) jeweils in einer Lagereinrichtung (17; 18) gelagert sind, die mindestens eine ringförmige Membranfeder (13, 15) umfasst, deren Innendurchmesser (d) im Wesentlichen dem Linsendurchmesser (d) entspricht, wobei die Membranfeder (13, 15) insbesondere eine Mehrzahl von azimutalen Schlitzen (19) aufweist.

8. Vorrichtung nach Anspruch 7, **dadurch gekennzeichnet, dass** die Lagereinrichtung (17; 18) zwei in Strahlrichtung (10) voneinander beabstandete Membranfedern (13, 15) umfasst, die durch ein parallel zur Strahlrichtung (10) verlaufendes Rohr (14) im Bereich des Innendurchmessers (d) miteinander verbunden sind.

9. Vorrichtung nach einem der vorhergehenden Ansprüche, **gekennzeichnet durch** ein Laserlichtkabel (12), aus dem der Laserstrahl (2) divergent austritt, wobei die zweite Teleskopanordnung (7) in der Nähe einer Austrittsebene (11) des Laserlichtkabels (12) angeordnet ist.

10. Scanner-Bearbeitungskopf (20) zur dreidimensionalen Werkstückbearbeitung mit einer Vorrichtung (1) zur Fokussierung des Laserstrahls (2) nach einem der Ansprüche 1 bis 9, wobei die Lage des Fokuspunktes (6) in einer ersten und zweiten Raumrichtung mit zwei Scannerspiegeln (21, 22) und in einer dritten Raumrichtung durch Verändern der Fokuslage mit der Vorrichtung (1) einstellbar ist.

## Claims

1. Device (1) for focusing a laser beam (2), having a telescopic arrangement (3) which comprises a collimating optical element (4) for collimating the laser beam (2) and a downstream focusing optical element (5) for focusing the laser beam (2) at a focal point (6), with an additional second telescopic arrangement (7) having a first lens (8) and a downstream second lens (9) being arranged in the divergent beam path upstream of the one, first, telescopic arrangement (3) and the first lens (8) and/or the second lens (9) of the second telescopic arrangement (7) being displaceable relative to each other in the beam direction (10),
**characterised in that**
the first lens (8) and/or the second lens (9) are supported so as to be displaceable about a rest position in which the spacing (L) between the first lens (8) and the second lens (9) of the second telescopic arrangement (7) is equal to the sum of the values of the focal lengths thereof.

2. Device according to claim 1, **characterised in that** the lens diameters (d) of the second telescopic arrangement (7) are smaller than the diameters (D) of the optical elements of the first telescopic arrangement (3).

3. Device according to claim 1 or 2,
**characterised in that**
the first lens (8) and the second lens (9) of the second telescopic arrangement (7) each have focal lengths of identical size in absolute terms.

4. Device according to any one of the preceding claims,
**characterised in that**
the first lens (8) and the second lens (9) of the second telescopic arrangement (7) are in the form of convergent lenses.

5. Device according to any one of claims 1 to 3,
**characterised in that**,
in the second telescopic arrangement, the first lens (8) is constructed as a convergent lens and the second lens (9) is constructed as a diverging lens.

6. Device according to any one of the preceding claims,
**characterised in that**
the first lens (8) and the second lens (9) of the second telescopic arrangement (7) can be moved in the beam direction (10) in opposite directions with identical path lengths.

7. Device according to any one of the preceding claims,
**characterised in that**,
in the second telescopic arrangement (7), the first lens (8) and/or the second lens (9) are each supported in a bearing device (17; 18) which comprises at least one annular membrane spring (13, 15) whose inner diameter (d) substantially corresponds to the lens diameter (d), the membrane spring (13, 15) in particular having a plurality of azimuthal slots (19).

8. Device according to claim 7,
**characterised in that**
the bearing device (17; 18) comprises two membrane springs (13, 15) which are spaced apart from each other in the beam direction (10) and which are connected to each other in the region of the inner diameter (d) by a pipe (14) which extends parallel with the beam direction (10).

9. Device according to any one of the preceding claims, **characterised by** a laser light cable (12), from which the laser beam (2) is discharged in a divergent manner, the second telescopic arrangement (7) being arranged in the vicinity of an exit plane (11) of the laser light cable (12).

10. Scanner processing head (20) for three-dimensional workpiece processing, having a device (1) for focusing the laser beam (2) according to any one of claims 1 to 9, the position of the focal point (6) being adjustable in a first and second spatial direction by means of two scanner mirrors (21, 22) and in a third spatial direction by changing the focal position by means of the device (1).

## Revendications

1. Dispositif (1) de focalisation d'un faisceau laser (2) avec un dispositif télescopique (3) qui comprend un élément optique collimateur (4) pour collimater le faisceau laser (2) et un élément optique focalisateur (5) consécutif pour focaliser le faisceau laser (2) sur un point focal (6), un deuxième dispositif télescopique (7) comprenant une première lentille (8) et une deuxième lentille (9) consécutive étant placé dans le chemin optique divergent du premier dispositif télescopique (3) et la première lentille (8) et/ou la deuxième lentille (9) du deuxième dispositif télescopique (7) étant déplaçables l'une par rapport à l'autre dans la direction du faisceau (10),
**caractérisé par le fait**
**que** la première lentille (8) et/ou la deuxième lentille (9) sont montées déplaçables autour d'une position de repos dans laquelle la distance (L) entre la première lentille (8) et la deuxième lentille (9) du deuxième dispositif télescopique (7) est égale à la somme des valeurs de leurs distances focales.

2. Dispositif selon la revendication 1, **caractérisé par le fait que** les diamètres (d) des lentilles du deuxième dispositif télescopique (7) sont plus faibles que les diamètres (D) des éléments optiques du premier dispositif télescopique (3).

3. Dispositif selon la revendication 1 ou 2, **caractérisé par le fait que** la première lentille (8) et la deuxième lentille (9) du deuxième dispositif télescopique (7) présentent des distances focales égales en valeur absolue.

4. Dispositif selon l'une des revendications précédentes, **caractérisé par le fait que** la première lentille (8) et la deuxième lentille (9) du deuxième dispositif télescopique (7) sont réalisées sous forme de lentilles convergentes.

5. Dispositif selon l'une des revendications 1 à 3, **caractérisé par le fait que** dans le deuxième dispositif télescopique (7) la première lentille (8) est réalisée sous forme de lentille convergente et la deuxième lentille (9) sous forme de lentille divergente.

6. Dispositif selon l'une des revendications précédentes, **caractérisé par le fait que** la première lentille (8) et la deuxième lentille (9) du deuxième dispositif télescopique (7) sont déplaçables, dans la direction du faisceau (10), en sens contraire de longueurs de parcours identiques.

7. Dispositif selon l'une des revendications précédentes, **caractérisé par le fait que** dans le deuxième dispositif télescopique (7) la première lentille (8) et/ou la deuxième lentille ; (9) sont montées chacune dans un dispositif de montage (17 ; 18) qui comprend au moins un ressort à membrane annulaire (13, 15) dont le diamètre intérieur (d) correspond essentiellement au diamètre de lentille (d), le ressort à membrane (13, 15) présentant en particulier une pluralité de fentes azimutales (19).

8. Dispositif selon la revendication 7, **caractérisé par le fait que** le dispositif de montage (17 ; 18) comprend deux ressorts à membrane (13, 15) distants l'un de l'autre dans la direction du faisceau (10) qui sont reliés ensemble au niveau du diamètre intérieur (d) par un tube (14) s'étendant parallèlement à la direction du faisceau (10).

9. Dispositif selon l'une des revendications précédentes, **caractérisé par** un câble pour lumière laser (12) duquel émerge le faisceau laser (2) divergent, le deuxième dispositif télescopique (7) étant disposé à proximité d'un plan d'émergence (11) du câble pour lumière laser (12).

10. Tête d'usinage à scanner (20) pour usinage tridimensionnel de pièces avec un dispositif (1) de focalisation d'un faisceau laser (2) selon l'une des revendications 1 à 9 dans laquelle la position du point focal (6) peut être réglée dans une première et une deuxième directions de l'espace au moyen de deux miroirs de balayage (21, 22) et dans une troisième direction de l'espace par modification de la position focale avec le dispositif (1).
